# FASCICULE DE BREVET EUROPEEN

(11) **EP 3 815 988 B1**
(45) Date de publication et mention de la délivrance du brevet: **14.09.2022**
(21) Numéro de dépôt: 20200606.0
(22) Date de dépôt: 07.10.2020
(51) Int. Cl.: B60R 21/207

(54) **SIÈGE DE VÉHICULE DOTÉ D'UN DISPOSITIF DE PROTECTION DU THORAX**
FAHRZEUGSITZ, DER MIT EINER THORAX-SCHUTZVORRICHTUNG AUSGESTATTET IST
VEHICLE SEAT PROVIDED WITH A DEVICE FOR PROTECTING THE THORAX

(30) Priorité: 30.10.2019 FR 1912213
(43) Date de publication de la demande: 05.05.2021
(73) Titulaire: Renault s.a.s, 92100 Boulogne Billancourt (FR)
(72) Inventeur: HORDONNEAU, Julien, 78450 Villepreux (FR); LAGARRIGUE, Olivier, 44500 La Baule (FR); RIVOALEN, Nelly, 91400 SACLAY (FR)
(74) Mandataire: Renault Group

(56) Documents cités:
- DE-A1- 19 912 727
- DE-A1-102008 037 810
- DE-A1-102017 131 140
- FR-A1- 2 943 969

## Description

La présente invention concerne un siège de véhicule doté d'un dispositif de protection du thorax.

Actuellement, dans certains types de véhicule, notamment les véhicules autonomes, les sièges sont amenés à être déplacés avec une grande amplitude afin que les occupants puissent se livrer à des activités variées, décorrélées de la conduite du véhicule. Ainsi, à titre d'exemple, le siège passager situé à côté du siège conducteur risque de se retrouver éloigné de l'airbag rangé dans la planche de bord et destiné à protéger la personne qui serait assise sur le siège passager. Cet éloignement peut être suffisamment important pour que l'airbag de la planche de bord soit inefficace lorsque se produit un choc du véhicule contre un obstacle extérieur. La personne assise sur le siège se retrouve alors dépourvue d'une protection pour sa tête et pour son thorax.

De façon plus générale, une tendance actuelle est de supprimer les airbags de planche de bord. Il faut donc pouvoir les placer à un autre endroit du véhicule, tout en leur permettant d'assurer avec efficacité la sécurité des passagers, notamment en minimisant les efforts au niveau de leur thorax dans le cas d'un choc du véhicule contre un obstacle extérieur.

La demande US20160082915 décrit un siège de véhicule doté d'airbags aptes à se déployer depuis les côtés du siège pour recouvrir le passager qui serait assis sur ledit siège. La demande DE 10 2017 131140 A1 divulgue un assemblage d'un siège de véhicule selon le préambule de la revendication 1.

Un siège selon l'invention est dimensionné pour présenter une bonne protection du thorax et de la tête d'une personne qui serait assise sur ledit siège lors d'un choc du véhicule contre un obstacle extérieur et ce, quelle que soit la position du siège dans le véhicule.

L'invention a pour objet un assemblage d'un siège de véhicule comprenant une assise et un dossier, et d'une ceinture de sécurité comprenant une sangle thoracique et une sangle ventrale ainsi qu'un pêne de ceinture.

Selon l'invention, le siège comprend au moins un sac gonflable et une paroi de retenue souple intégrés dans le dossier dudit siège, ledit sac étant fixé à ladite paroi de sorte que lors d'un choc du véhicule contre un obstacle extérieur, la paroi de retenue souple puisse se déployer le long de la sangle ventrale entre le dossier et la sangle thoracique et de sorte que le sac puisse se gonfler entre le dossier et la paroi de retenue souple déployée en étant entrainé par ladite paroi. De cette manière, la paroi de retenue souple va permettre de guider et de contrôler le déploiement de l'airbag lors d'un choc accidentel du véhicule contre un obstacle extérieur, afin que ledit airbag qui était initialement rangé dans le dossier puisse jouer son rôle de protection vis-à-vis d'une personne qui serait assise sur le siège. En effet, une fois gonflé, l'airbag est destiné à venir s'insérer entre la poitrine de ladite personne et la sangle thoracique pour d'une part, retenir la tête de cette personne afin d'éviter des efforts trop importants au niveau de la nuque, et d'autre part diminuer les efforts engendrés au niveau de la cage thoracique. La paroi de retenue souple peut par exemple être réalisée en tissu ou peut par exemple être constitué par un filet. Cette paroi permet juste de guider et de contrôler le déploiement de l'airbag, et doit donc être légère et pliable. La sangle ventrale, lors d'un choc accidentel du véhicule contre un obstacle extérieur, en plus de sa fonction principale de retenue, va jouer le rôle d'une piste de guidage pour le déploiement de la paroi de retenue souple. Le pêne de ceinture est destiné à venir s'insérer dans un dispositif de réception solidarisé à un élément de carrosserie du véhicule. Préférentiellement, le sac et la paroi souple sont intégrés dans un bourrelet latéral de maintien du dossier, et avantageusement dans une zone basse dudit bourrelet.

Selon une caractéristique possible de l'invention, la sangle thoracique relie un premier enrouleur au pêne de ceinture et la sangle ventrale relie un deuxième enrouleur audit pêne. Pour cette configuration particulière, le pêne comprend une première boucle à laquelle est fixée une extrémité de la sangle ventrale, et une deuxième boucle à laquelle est fixée une extrémité de la sangle thoracique.

Selon une caractéristique possible de l'invention, une extrémité de la paroi de retenue souple est fixée à une partie fusible du pêne de ceinture, le deuxième enrouleur étant équipé d'un mécanisme de rétraction supplémentaire relié à un fil qui est solidarisé à ladite partie fusible, et lors d'un choc du véhicule, le mécanisme supplémentaire est activé de sorte que la partie fusible se détache du pêne sous l'effet de l'effort de traction exercé par le fil puis coulisse le long de la sangle ventrale en provoquant le déploiement de la paroi de retenue souple. Autrement dit, lors d'un choc du véhicule contre un obstacle extérieur, la partie fusible va s'effacer pour permettre à l'extrémité de la paroi de retenue souple, de coulisser le long de la sangle ventrale sous l'effet du mécanisme de rétraction supplémentaire du deuxième enrouleur.

Selon une caractéristique possible de l'invention, le sac présente une première partie apte à se gonfler sous la mâchoire de l'occupant et une deuxième partie apte à se gonfler sur la cage thoracique dudit occupant pour mieux répartir les efforts de la sangle thoracique sur celle-ci. Cet airbag est dimensionné pour protéger une personne qui serait assise sur le siège, contre le coup du lapin et contre des efforts thoraciques importants. La première partie de l'airbag est destinée à empêcher la tête de l'occupant de basculer brutalement vers l'avant, et la deuxième partie de l'airbag permet d'amortir les efforts générés lors du choc du véhicule en réduisant leur intensité et en les répartissant de façon homogène au niveau du thorax de la personne qui serait assise sur le siège.

Selon une caractéristique possible de l'invention, la première partie du sac présente une cinématique de gonflage lente afin d'empêcher l'occupant d'être blessé par un gonflement trop brutal du sac. En effet, le choc que pourrait produire un gonflement trop brutal de la première partie du sac sur l'occupant, pourrait être important et causer des blessures au visage de dudit occupant.

Selon une caractéristique possible de l'invention, les deux enrouleurs sont placés du même côté du siège, le premier enrouleur étant situé au-dessus du deuxième enrouleur et le pêne de ceinture est placé de l'autre côté dudit siège.

Selon une caractéristique possible de l'invention, une fois que la paroi de retenue souple a été déployée suite à un choc du véhicule, ladite paroi a une forme triangulaire comprenant une base élargie s'étendant le long de la sangle ventrale et une partie amincie située dans une zone supérieure du dossier. Cette paroi de retenue souple est dimensionnée au plus juste afin de guider et de contrôler l'orientation de l'airbag en phase de gonflage. Il ne faut donc pas qu'elle soit trop lourde ni trop encombrante.

Selon une caractéristique possible de l'invention, la paroi de retenue souple est un filet. Un filet est une pièce qui est légère et peu encombrante. Un filet peut également se plier facilement en occupant un volume réduit.

L'invention a pour autre objet un procédé de déploiement d'un sac gonflable d'un assemblage selon l'invention lors d'un choc du véhicule contre un obstacle extérieur.

Selon l'invention, le procédé comprend les étapes suivantes :
- Une étape d'actionnement du mécanisme de rétraction supplémentaire du deuxième enrouleur provoquant le détachement de la partie fusible du pêne, puis le déploiement de la paroi de retenue souple le long de la sangle ventrale sous l'effet du déplacement de ladite partie fusible le long de ladite sangle,
- Une étape de déploiement et de gonflage du sac, contrôlée par le déploiement de la paroi de retenue souple.

La paroi de retenue souple se déploie le long de la sangle ventrale avant que l'airbag ne se gonfle. Cette paroi va donc guider et contrôler l'orientation de l'airbag pendant son gonflement afin que celui-ci soit bien positionné sur le siège et assure pleinement sa fonction de protection vis à vis de la personne qui serait assise sur le siège.

Selon une caractéristique possible de l'invention, lors de l'étape de déploiement de la paroi de retenue souple, ladite paroi se retrouve entre la sangle thoracique et le dossier, et lors du gonflement du sac, ledit sac gonflé se retrouve entre la paroi de retenue souple et le thorax d'une personne qui serait assise sur le siège.

Un assemblage selon l'invention présente l'avantage d'être compact en intégrant un airbag de protection dans le dossier du siège, et de proposer un bon contrôle du déploiement dudit airbag lors d'un choc accidentel du véhicule contre un obstacle extérieur grâce à la présence de la paroi de retenue souple. Un tel assemblage a également l'avantage de protéger efficacement la tête d'un occupant qui serait assis sur le siège ainsi que sa cage thoracique, grâce à une géométrie simple de l'airbag ne nécessitant pas une mise au point minutieuse source de coûts supplémentaires.

On donne ci-après une description détaillée d'un mode de réalisation préféré d'un assemblage selon l'invention en se référant aux figures suivantes :
[Fig. 1] représente une vue de face simplifiée d'un assemblage selon l'invention comprenant un siège et une ceinture de sécurité, l'airbag n'étant pas déployé,
[Fig. 2] représente une vue de côté de l'assemblage de la figure 1,
[Fig. 3] représente une vue de face simplifiée de l'assemblage des figures 1 et 2, l'airbag ayant été déployé suite à un choc du véhicule contre un obstacle extérieur,
[Fig. 4] représente une vue de face d'un pêne de ceinture d'un assemblage selon l'invention.

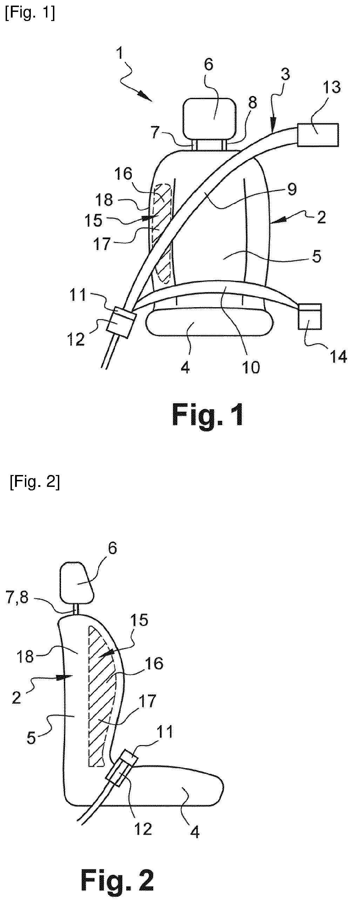

En se référant aux figures 1 et 2, un assemblage 1 selon l'invention comprend un siège 2 et une ceinture 3 de sécurité associée audit siège 2. Le siège 2 comporte conventionnellement une assise 4 et un dossier 5 qui est généralement réglable en inclinaison. Un appui-tête 6 est solidarisé au dossier 5 de manière à émerger d'un bord supérieur 6 dudit dossier 5. Cet appui-tête 6 est réglable en hauteur au moyen d'un coulissement dans le dossier 5 de ceux tiges 7, 8 qui sont arrimées audit appui-tête 6. La ceinture 3 de sécurité comprend une sangle thoracique 9 et une sangle ventrale 10 se rejoignant au niveau d'un pêne11 de ceinture, destiné à être fixé à un dispositif de fixation 12 arrimé à un élément de structure du véhicule, pouvant par exemple être un plancher. Le pêne comprend un premier dispositif d'accrochage 50 auquel est fixée une extrémité de la sangle ventrale 10 et un deuxième dispositif d'accrochage 51 auquel est fixée une extrémité de la sangle thoracique 9. La ceinture de sécurité 3 comporte un premier enrouleur 13 à partir duquel peut être enroulée ou déroulée la sangle thoracique 9 et un deuxième enrouleur 14 à partir duquel peut être enroulée ou déroulée la sangle ventrale 10. Le premier enrouleur 13 et le deuxième enrouleur 14 sont placés d'un même côté du siège 2, le dispositif de fixation 12 destiné à recevoir le pêne11 de ceinture étant placé de l'autre côté dudit siège 2.

Un dispositif de sécurité 15 comprenant un sac gonflable 16 ou airbag et un filet 17 est inséré dans le dossier 5 du siège 2, et plus spécifiquement dans une zone basse d'un bourrelet latéral de maintien dudit dossier 5. Ce dispositif de sécurité 15 s'étend le long d'un bord latéral 18 du dossier 5 délimitant ledit dossier 5 du côté où est placé le dispositif de fixation 12 destiné à recevoir le pêne11 de ceinture. Le dispositif de sécurité 15 s'étend sur au moins 80% de la hauteur totale du dossier 5 et sur au plus 30 % de la largeur totale dudit dossier 5. Le sac gonflable 16 est fixé au filet 17.

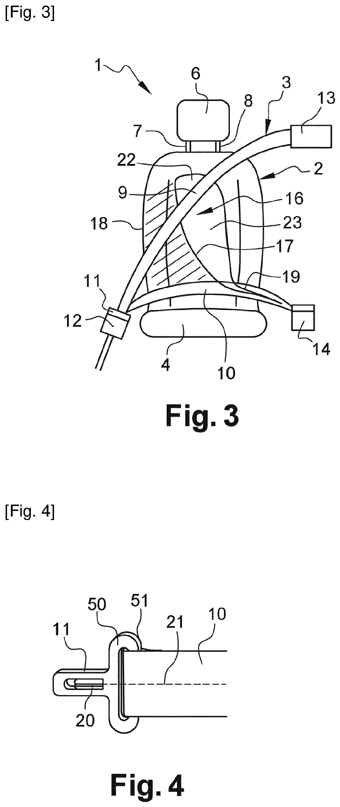

En se référant aux figures 3 et 4, une extrémité 19 du filet 17 est fixée à une partie fusible 20 du pêne11 de ceinture. Le deuxième enrouleur 14 est doté d'un mécanisme supplémentaire de rétraction, ayant préférentiellement une source énergétique d'origine pyrotechnique, et qui est relié à un fil 21 passant dans la sangle ventrale 10. Le fil 21 est solidarisé à la partie fusible 20 du pêne11. De cette manière, lors d'un choc accidentel du véhicule contre un obstacle extérieur, le mécanisme supplémentaire de rétraction est activé provoquant le détachement de la partie fusible 20 du pêne 11 sous l'effet de l'effort de traction exercé par le fil 21. La partie fusible 20 va alors se déplacer le long de la sangle ventrale 10 toujours sous l'effet de l'effort de traction exercé par le fil 21, entrainant avec elle le filet 17 qui est fixé à ladite partie fusible 20. Le filet 17 va alors se déployer le long de la sangle ventrale 10, engendrant le déploiement du sac 16 qui est solidarisé audit filet 17. Lorsque le filet 17 s'est déployé, il a globalement une forme triangulaire, comprenant une base élargie s'étendant le long de la sangle ventrale 10 et une partie amincie située dans une zone supérieure du dossier 5.

En se référant à la figure 3, une fois que le sac 16 s'est gonflé lors d'un choc du véhicule contre un obstacle extérieur, il présente une partie supérieure 22 qui est destinée à venir se placer sous la mâchoire d'un occupant qui serait assis sur le siège 2 afin d'empêcher un mouvement de pivotement vers l'avant de sa tête et donc de générer des contraintes trop importantes au niveau de sa nuque. Le sac présente également une partie centrale 23 destinée à venir se superposer à la cage thoracique de l'occupant, afin de diminuer et de mieux répartir les efforts sur la cage thoracique dudit occupant. Il est à noter que la cinématique de gonflement de la partie supérieure 22 du sac est lente, afin que ledit occupant ne ressente pas un effet de type claque ou gifle de la part du sac 16 en cours de gonflement.

Il est à noter que, lorsque le dispositif de sécurité 15 a été déployé, le sac gonflable 16 se retrouve au contact de la poitrine de l'occupant qui est assis sur le siège 2 et au contact du filet 17, ledit filet 17 étant inséré entre ledit sac gonflable déployé 16 et la sangle thoracique 9,

Un procédé de déploiement du dispositif de sécurité 15 d'un assemblage selon l'invention, lors d'un choc du véhicule contre un obstacle extérieur au véhicule comprend les étapes suivantes :
- Une étape d'actionnement du mécanisme de rétraction supplémentaire du deuxième enrouleur (14) provoquant le détachement de la partie fusible (20) du pêne (11), puis le déploiement de la paroi (17) de retenue souple le long de la sangle ventrale (10) sous l'effet du déplacement de ladite partie fusible (20) le long de ladite sangle (10),
- Une étape de déploiement et de gonflement du sac gonflable 16 qui suit le mouvement du filet 17 auquel il est attaché, de sorte que l'airbag 16 se retrouve entre la poitrine de l'occupant et le filet 17, ledit filet 17 étant inséré entre ledit sac 16 et la sangle thoracique 9. Lors de ce gonflement, la partie supérieure 22 du sac 16 vient se placer sous la mâchoire de l'occupant et la partie centrale 23 vient se superposer à la cage thoracique dudit occupant.

## Revendications

1. Assemblage (1) d'un siège (2) de véhicule comprenant une assise (4) et un dossier (5), et d'une ceinture (3) de sécurité comprenant une sangle thoracique (9) et une sangle ventrale (10) ainsi qu'un pêne (11) de ceinture, où le siège (2) comprend au moins un sac gonflable (16) et une paroi (17) de retenue souple intégrés dans le dossier (5) dudit siège (2), ledit sac (16) étant fixé à ladite paroi (17) de sorte que lors d'un choc du véhicule contre un obstacle extérieur, la paroi (17) de retenue souple puisse se déployer le long de la sangle ventrale (10) entre le dossier (5) et la sangle thoracique (9) et de sorte que le sac (16) puisse se gonfler entre le dossier (5) et la paroi (17) de retenue souple en étant entrainé par ladite paroi souple (17), **caractérisé en ce que** la sangle ventrale joue le rôle d'une piste de guidage pour le déploiement de la paroi (17) de retenue souple.

2. Assemblage selon la revendication 1, **caractérisé en ce que** la sangle thoracique (9) relie un premier enrouleur (13) au pêne (11) de ceinture et la sangle ventrale (10) relie un deuxième enrouleur (14) audit pêne (11).

3. Assemblage selon la revendication 2, **caractérisé en ce qu'**une extrémité (19) de la paroi (17) de retenue souple est fixée à une partie fusible (20) du pêne (11) de ceinture, et **en ce que** le deuxième enrouleur (14) est équipé d'un mécanisme de rétraction supplémentaire relié à un fil (21) qui est solidarisé à ladite partie fusible (20), et lors d'un choc du véhicule, le mécanisme supplémentaire de rétraction est activé de sorte que la partie fusible (20) se détache du pêne (11) sous l'effet de l'effort de traction exercé par le fil (21) puis coulisse le long de la sangle ventrale (10) en provoquant déploiement de la paroi de retenue souple (17)..

4. Assemblage selon l'une quelconque des revendications 2 ou 3, **caractérisé en ce que** le sac (16) présente une première partie (22) apte à se gonfler sous la mâchoire de l'occupant et une deuxième partie (23) apte à se gonfler sur la cage thoracique dudit occupant pour mieux répartir les efforts de la sangle thoracique (9) sur celle-ci.

5. Assemblage selon la revendication 4, **caractérisé en ce que** la première partie (22) du sac (16) présente une cinématique de gonflage lente afin d'empêcher l'occupant d'être blessé par un gonflement trop brutal du sac (16).

6. Assemblage selon l'une quelconque des revendications 2 à 5, **caractérisé en ce que** les deux enrouleurs (13, 14) sont placés du même côté du siège (2), le premier enrouleur (13) étant situé au-dessus du deuxième enrouleur (14), et le pêne (11) de ceinture est placé de l'autre côté dudit siège (2).

7. Assemblage selon l'une quelconque des revendications 1 à 6, **caractérisé en ce que**, une fois que la paroi (17) de retenue souple a été déployée suite à un choc du véhicule, ladite paroi (17) a une forme triangulaire comprenant une base élargie s'étendant le long de la sangle ventrale (10) et une partie amincie située dans une zone supérieure du dossier (5).

8. Assemblage selon l'une quelconque des revendications 1 à 7, **caractérisé en ce que** la paroi de retenue souple est un filet (17).

9. Procédé de déploiement d'un sac gonflable d'un assemblage (1) selon l'une quelconque des revendications 1 à 8 lors d'un choc du véhicule contre un obstacle extérieur, **caractérisé en ce qu'**il comprend les étapes suivantes :
- Une étape d'actionnement du mécanisme de rétraction supplémentaire du deuxième enrouleur (14) provoquant le détachement de la partie fusible (20) du pêne (11), puis le déploiement de la paroi (17) de retenue souple le long de la sangle ventrale (10) sous l'effet du déplacement de ladite partie fusible (20) le long de ladite sangle (10),
- Une étape de déploiement et de gonflage du sac (16), contrôlée par le déploiement de la paroi (17) de retenue souple.

10. Procédé selon la revendication 9, **caractérisé en ce que** lors de l'étape de déploiement de la paroi (17) de retenue souple, ladite paroi (17) se retrouve entre la sangle thoracique (9) et le dossier (5), et **en ce que** lors du gonflement du sac (16) ledit sac (16) gonflé se retrouve entre la paroi (17) de retenue souple et le thorax d'une personne qui serait assise sur le siège.

## Patentansprüche

1. Anordnung (1) eines Fahrzeugsitzes (2), der eine Sitzfläche (4) und eine Rückenlehne (5) umfasst, und eines Sicherheitsgurts (3), der einen Brustgurt (9) und einen Bauchgurt (10) sowie einen Gurtschlossriegel (11) umfasst, wobei der Sitz (2) mindestens einen Airbag (16) und eine flexible Rückhaltewand (17) umfasst, die in die Rückenlehne (5) des Sitzes (2) integriert sind, wobei der Airbag (16) so an der Wand (17) befestigt ist, dass sich bei einem Aufprall des Fahrzeugs auf ein äußeres Hindernis die flexible Rückhaltewand (17) entlang des Bauchgurts (10) zwischen der Rückenlehne (5) und dem Brustgurt (9) entfalten kann und dass sich der Airbag (16) zwischen der Rückenlehne (5) und der flexiblen Rückhaltewand (17) aufblasen kann, indem er von der flexiblen Wand (17) mitgenommen wird, **dadurch gekennzeichnet, dass** der Bauchgurt als Führungsbahn für die Entfaltung der flexiblen Rückhaltewand (17) dient.

2. Anordnung nach Anspruch 1, **dadurch gekennzeichnet, dass** der Brustgurt (9) einen ersten Aufroller (13) mit dem Gurtschlossriegel (11) verbindet und der Bauchgurt (10) einen zweiten Aufroller (14) mit dem Schlossriegel (11) verbindet.

3. Anordnung nach Anspruch 2, **dadurch gekennzeichnet, dass** ein Ende (19) der flexiblen Rückhaltewand (17) an einem Sicherungsteil (20) des Gurtschlossriegels (11) befestigt ist und dass der zweite Aufroller (14) mit einem zusätzlichen Rückzugsmechanismus ausgestattet ist, der mit einem Draht (21) verbunden ist, der fest mit dem Sicherungsteil (20) verbunden ist, und wobei bei einem Aufprall des Fahrzeugs der zusätzliche Rückzugsmechanismus aktiviert wird, so dass sich der Sicherungsteil (20) unter der Wirkung der durch den Draht (21) ausgeübten Zugkraft vom Schlossriegel (11) löst und anschließend entlang des Bauchgurts (10) gleitet und die Entfaltung der flexiblen Rückhaltewand (17) bewirkt.

4. Anordnung nach einem der Ansprüche 2 oder 3, **dadurch gekennzeichnet, dass** der Airbag (16) einen ersten Teil (22) aufweist, der sich unter dem Kiefer des Insassen aufblasen kann, und einen zweiten Teil (23), der sich unter dem Brustkorb des Insassen aufblasen kann, um die Kräfte des Brustgurts (9) besser auf diesen zu verteilen.

5. Anordnung nach Anspruch 4, **dadurch gekennzeichnet, dass** der erste Teil (22) des Airbags (16) eine langsame Aufblaskinematik aufweist, um zu verhindern, dass der Insasse durch ein zu abruptes Aufblasen des Airbags (16) verletzt wird.

6. Anordnung nach einem der Ansprüche 2 bis 5, **dadurch gekennzeichnet, dass** die beiden Aufroller (13, 14) auf derselben Seite des Sitzes (2) angeordnet sind, wobei sich der erste Aufroller (13) über dem zweiten Aufroller (14) befindet, und dass der Gurtschlossriegel (11) auf der anderen Seite des Sitzes (2) angeordnet ist.

7. Anordnung nach einem der Ansprüche 1 bis 6, **dadurch gekennzeichnet, dass**, nachdem die flexible Rückhaltewand (17) infolge eines Aufpralls des Fahrzeugs entfaltet wurde, die Wand (17) eine dreieckige Form mit einer verbreiterten Basis, die sich entlang des Bauchgurts (10) erstreckt, und einem verjüngten Teil, der sich in einem oberen Bereich der Rückenlehne (5) befindet, aufweist.

8. Anordnung nach einem der Ansprüche 1 bis 7, **dadurch gekennzeichnet, dass** die flexible Rückhaltewand ein Netz (17) ist.

9. Verfahren zur Entfaltung eines Airbags einer Anordnung (1) nach einem der Ansprüche 1 bis 8 bei einem Aufprall des Fahrzeugs auf ein äußeres Hindernis, **dadurch gekennzeichnet, dass** es die folgenden Schritte umfasst:
- einen Schritt der Betätigung des zusätzlichen Rückzugsmechanismus des zweiten Aufrollers (14), der das Lösen des Sicherungsteils (20) des Schlossriegels (11) und dann die Entfaltung der flexiblen Rückhaltewand (17) entlang des Bauchgurts (10) unter der Wirkung der Bewegung des Sicherungsteils (20) entlang des Gurts (10) bewirkt,
- einen Schritt der Entfaltung und des Aufblasens des Airbags (16), der durch die Entfaltung der flexiblen Rückhaltewand (17) gesteuert wird.

10. Verfahren nach Anspruch 9, **dadurch gekennzeichnet, dass** beim Schritt der Entfaltung der flexiblen Rückhaltewand (17) die Wand (17) zwischen dem Brustgurt (9) und der Rückenlehne (5) liegt und dass beim Aufblasen des Airbags (16) der aufgeblasene Airbag (16) zwischen der flexiblen Rückhaltewand (17) und dem Brustkorb einer auf dem Sitz sitzenden Person liegt.

## Claims

1. Assembly (1) of a vehicle seat (2) comprising a seat cushion (4) and a backrest (5) and of a safety belt (3) comprising an upper-body strap (9) and a lap strap (10) as well as a seatbelt buckle tongue (11), wherein the seat (2) comprises at least one airbag (16) and a flexible retaining wall (17) which are incorporated into the backrest (5) of said seat (2), said airbag (16) being fixed to said wall (17) such that when the vehicle is involved in an impact with an external obstacle, the flexible retaining wall (17) can deploy along the lap strap (10) between the backrest (5) and the upper-body strap (9) and so that the airbag (16) can inflate between the backrest (5) and the flexible retaining wall (17) while being driven into position by said flexible wall (17), **characterized in that** the lap strap acts as a guideway for the deployment of the flexible retaining wall (17).

2. Assembly according to Claim 1, **characterized in that** the upper-body strap (9) connects a first winder (13) to the seatbelt buckle tongue (11) and the lap strap (10) connects a second winder (14) to said buckle tongue (11) .

3. Assembly according to Claim 2, **characterized in that** one end (19) of the flexible retaining wall (17) is fixed to a frangible part (20) of the seatbelt buckle tongue (11), and **in that** the second winder (14) is equipped with an additional retraction mechanism connected to a filament (21) which is secured to said frangible part (20) and in the event of the vehicle being in an impact, the additional retraction mechanism is activated so that the frangible part (20) detaches from the buckle tongue (11) under the effect of the tension applied by the filament (21) and then slides along the lap strap (10) causing the flexible retaining wall (17) to deploy.

4. Assembly according to either one of Claims 2 and 3, **characterized in that** the airbag (16) has a first part (22) able to inflate under the jaw of the occupant and a second part (23) able to inflate over the ribcage of said occupant in order to better distribute the forces of the upper-body strap (9) over this ribcage.

5. Assembly according to Claim 4, **characterized in that** the first part (22) of the airbag (16) has slow inflation dynamics to prevent the occupant from being injured by too sudden an inflation of the airbag (16).

6. Assembly according to any one of Claims 2 to 5, **characterized in that** the two winders (13, 14) are positioned on the one same side of the seat (2), the first winder (13) being situated above the second winder (14), and the seatbelt buckle tongue (11) is positioned on the other side of said seat (2).

7. Assembly according to any one of Claims 1 to 6, **characterized in that** once the flexible retaining wall (17) has been deployed following a vehicle impact, said wall (17) has a triangular shape comprising a widened base extending along the lap strap (10) and a thinner part situated in an upper zone of the backrest (5).

8. Assembly according to any one of Claims 1 to 7, **characterized in that** the flexible retaining wall is a net (17).

9. Method for deploying an airbag of an assembly (1) according to any one of Claims 1 to 8 when the vehicle is involved in an impact with an external obstacle, **characterized in that** it comprises the following steps:
- a step of actuating the additional retraction mechanism of the second winder (14), causing the frangible part (20) of the buckle tongue (11) to detach, and then causing the flexible retaining wall (17) to deploy along the lap strap (10) under the effect of the movement of said frangible part (20) along said strap (10),
- a step of deploying and inflating the airbag (16), which is controlled by the deployment of the flexible retaining wall (17).

10. Method according to Claim 9, **characterized in that** during the step of deploying the flexible retaining wall (17), said wall (17) is situated between the upper-body strap (9) and the backrest (5), and **in that** upon inflation of the airbag (16) said inflated airbag (16) is situated between the flexible retaining wall (17) and the torso of any individual who may be seated in the seat.
